(19) Europäisches Patentamt

European Patent Office

Office européen des brevets

(11) EP 0 708 060 A1

(12) ## DEMANDE DE BREVET EUROPEEN

(43) Date de publication:
24.04.1996 Bulletin 1996/17

(51) Int Cl.6: **C03B 29/02**, C03B 37/012, C03C 15/00

(21) Numéro de dépôt: 95402289.3

(22) Date de dépôt: 13.10.1995

(84) Etats contractants désignés:
DK FR NL

(30) Priorité: 18.10.1994 FR 9412420

(71) Demandeur: ALCATEL FIBRES OPTIQUES
F-95871 Bezons Cedex (FR)

(72) Inventeurs:
• Barre, Gilles
F-91240 Saint Michel Sur Orge (FR)

• Le Sergent, Christian
F-91460 Marcoussis (FR)

(74) Mandataire: **Pothet, Jean Rémy Emile Ludovic**
**c/o SOSPI**
**14-16 rue de la Baume**
**F-75008 Paris (FR)**

(54) **Procédé d'amélioration géométrique d'un tube en verre pour réalisation de préformé pour fibres optiques**

(57) Procédé pour améliorer la géométrie d'un tube en verre de silice destiné à la réalisation d'une préforme, comprennant les étapes suivantes :

- on détermine la génératrice du tube au droit de laquelle l'épaisseur du tube est la plus grande,

- le tube étant maintenu fixe en rotation, on réalise au moins une passe d'attaque interne au tube au moyen d'un gaz pouvant décomposer la silice, tout en effectuant un chauffage extérieur du tube le long de ladite génératrice à l'aide d'un organe de chauffage.

FIG.2

EP 0 708 060 A1

## Description

La présente invention concerne un procédé pour l'amélioration géométrique d'un tube de silice utilisé pour la réalisation d'une préforme de fibre optique par exemple par la méthode connue sous le sigle MCVD.

On sait que la fabrication des fibres optiques comprend l'étirage à chaud d'une préforme qui comporte les diverses couches optiques qui seront présentes dans la fibre. La préforme est obtenue à partir d'un tube de silice par des procédés tels que le procédé MCVD.

Pour obtenir une fibre ayant d'excellentes qualités, il importe de réaliser une préforme à partir d'un tube ayant une forme parfaite ; on entend par cela que la surface cylindrique intérieure du tube soit parfaitement coaxiale à sa surface cylindrique extérieure. Le moindre décentrement se répercute sur la fibre obtenue et entraîne une dispersion de polarisation des signaux transmis, ainsi que des pertes au niveau des connexions.

En effet, le traitement thermique permettant de déposer à l'intérieur du tube les différentes couches constituant le coeur de la préforme (et ultérieurement celui de la fibre optique) n'est pas identique en tous points de la surface intérieure du tube puisque, du fait des différences d'épaisseur du tube, le chauffage, réalisé depuis l'extérieur du tube, n'apporte pas une puissance uniforme sur toute la surface intérieure de ce dernier. Ainsi, on observe que les préformes obtenues à partir de tubes présentant de tels défauts ont un coeur ovale. Or un coeur n'ayant pas une section transversale parfaitement cylindrique pose pour la fibre les problèmes mentionnés ci-dessus, c'est-à-dire qu'il provoque une dispersion de polarisation des signaux transmis et des pertes au niveau des connexions.

Malgré toutes les précautions prises lors de la fabrication des tubes de silice, ceux-ci présentent souvent des imperfections de forme, qui se traduisent par un décentrement entre leur surface interne et leur surface externe. Ce défaut se retrouve généralement tout le long d'une génératrice du tube.

On comprend que ces défauts sont fort préjudiciables aux propriétés de transmission des fibres optiques issues d'une préforme obtenue à partir d'un tel tube.

Un but de la présente invention est de définir un procédé permettant de corriger les imperfections géométriques d'un tel tube et donc d'éviter l'obtention de coeurs n'ayant pas une section transversale parfaitement cylindrique.

Le procédé de l'invention est caractérisé en ce qu'il comprend les étapes suivantes :

- on détermine la génératrice du tube au droit de laquelle l'épaisseur du tube est la plus grande,
- le tube étant maintenu fixe en rotation, on réalise au moins une passe d'attaque interne au tube au moyen d'un gaz pouvant décomposer la silice, tout en effectuant un chauffage extérieur du tube le long de ladite génératrice à l'aide d'un organe de chauffage.

Le gaz d'attaque est choisi par exemple parmi les composés fluorés tels que les gaz dont les formules chimiques sont les suivantes : $SF_6$, $CF_4$, $CCl_2F_2$, $C_2F_6$, $C_3F_8$, $SiF_4$.

L'invention est précisée par la description détaillée du procédé de l'invention, en regard du dessin annexé dans lequel :

- la figure 1 est une vue en coupe d'un tube de silice dont la géométrie doit être améliorée,
- la figure 2 est un graphique illustrant l'amélioration subie par un tube après plusieurs passes d'attaque corrective selon le procédé de l'invention.

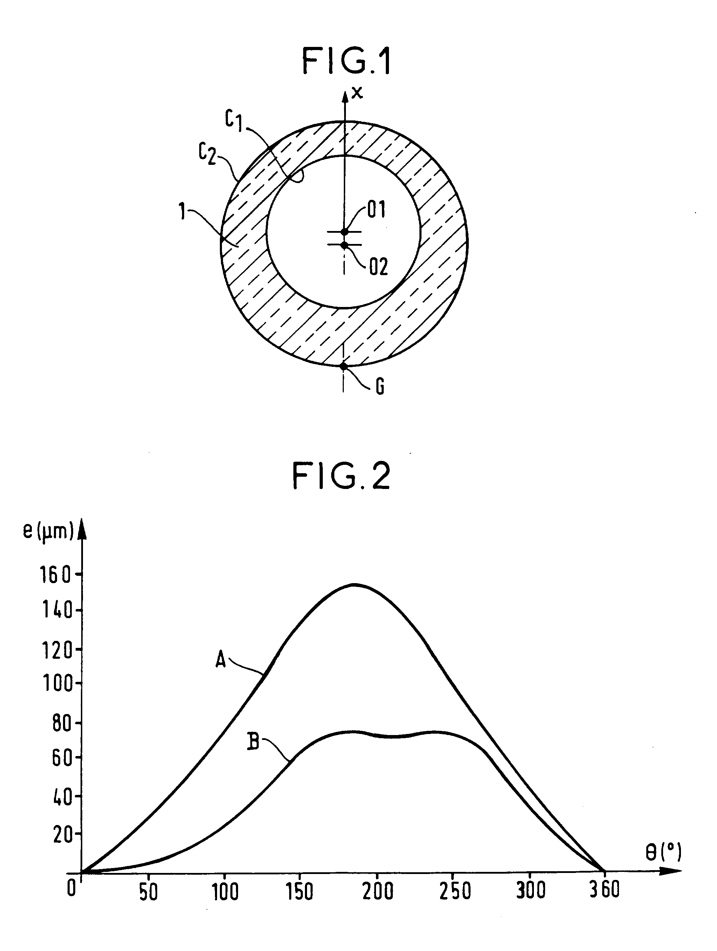

La figure 1 représente, en coupe transversale, un tube de silice 1 destiné à être utilisé pour la réalisation d'une préforme. Comme on le voit à la figure 1, le cercle $C_2$ délimitant la section externe du tube est excentré par rapport au cercle $C_1$ délimitant la section interne du tube 1. Dans le dessin, dans lequel $O_1$ est le centre du cercle intérieur et $O_2$ le centre du cercle extérieur, l'excentrement $O_1O_2$ a été fortement exagéré, pour être visible ; dans la réalité, pour un tube ayant par exemple un diamètre intérieur de 2,6 cm et un diamètre extérieur de 3 cm, cet excentrement est généralement compris entre 20 et 200 μm.

Selon le procédé de l'invention, on détermine, par exemple par une mesure physique ou optique, la génératrice G du tube au droit de laquelle l'épaisseur du tube est maximale.

On place ensuite le tube dans des moyens de maintien tels qu'un tour de verrier, de sorte que la génératrice G soit en regard d'un organe de chauffage, par exemple un chalumeau ; on effectue une ou plusieurs passes de correction, en envoyant à l'intérieur du tube un mélange gazeux d'un gaz d'attaque tel que le $SF_6$ (ou, en variante un gaz fluoré tel que $CF_4$, $CCl_2F_2$, $C_2F_6$, $C_3F_8$, $SiF_4$, etc...) et d'oxygène (lorsque cela est nécessaire compte tenu de la composition du gaz d'attaque), tout en déplaçant le chalumeau à vitesse constante le long de la génératrice G. Ces passes de correction sont angulairement sélectives selon la génératrice G concernée, c'est-à-dire que l'organe de chauffage permet de chauffer suivant un secteur angulaire assez étroit, par exemple de l'ordre de 60°.

Il en résulte une disparition de la surépaisseur de silice au voisinage de l'endroit chauffé, la quantité de silice en excès volatilisée étant proportionnelle au débit de $SF_6$ et à la durée de l'attaque. La silice en excès est volatilisée par une réaction chimique qui peut s'écrire schématiquement, dans le cas où le gaz d'attaque est l'hexafluorure de soufre $SF_6$ :

$$3\ SiO_2 + 2\ SF_6 \leftrightarrow 3\ SiF_4\nearrow + 2\ SO_2 + O_2$$

Un exemple du résultat est illustré dans la figure 2, où l'on a représenté la surépaisseur e en fonction de l'angle θ compté à partir d'un demi-axe ($O_1x$) de même direction et opposé au demi-axe ($O_1G$). Le tube de silice présentait, le long d'une génératrice, une surépaisseur maximale e de 160 mm (courbe A) ; après trois passes de correction effectuées à la vitesse de 0,2 cm/s, avec une température du chalumeau de 1100°C et un débit de gaz de 1700 $cm^3$/s, le gaz contenant 70% d'oxygène et 30% d'hexafluorure de soufre en volume, la surépaisseur a été divisée par deux (courbe B). La température du chalumeau peut atteindre la température limite de déformation du tube, c'est-à-dire environ 1700°C.

Bien entendu, l'invention n'est pas limitée au mode de réalisation qui vient d'être décrit.

En particulier, l'organe de chauffage peut être quelconque du moment qu'il permet de chauffer à une température suffisante et dans un secteur angulaire relativement étroit. Ce peut être par exemple une torche à plasma.

D'autre part, l'invention s'applique à la correction de la géométrie de tout tube de silice destiné à la réalisation de préforme, quelle que soit le procédé utilisé pour réaliser la préforme.

Enfin, on pourra remplacer tout moyen par un moyen équivalent sans sortir du cadre de l'invention.

**Revendications**

1.  Procédé pour améliorer la géométrie d'un tube de silice destiné à la réalisation d'une préforme, **caractérisé en ce qu'**il comprend les étapes suivantes :

    -   on détermine la génératrice du tube au droit de laquelle l'épaisseur du tube est la plus grande,
    -   le tube étant maintenu fixe en rotation, on réalise au moins une passe d'attaque interne au tube au moyen d'un gaz pouvant décomposer la silice, tout en effectuant un chauffage extérieur du tube le long de ladite génératrice à l'aide d'un organe de chauffage.

2.  Procédé selon la revendication 1, caractérisé en ce que le gaz est choisi parmi les composés fluorés tels que les gaz dont les formules chimiques sont $SF_6$, $CF_4$, $CCl_2F_2$, $C_2F_6$, $C_3F_8$, $SiF_4$.

3.  Procédé selon l'une des revendications 1 ou 2 caractérisé en ce que ledit organe de chauffage permet de chauffer suivant un secteur angulaire de l'ordre de 60°.

# FIG.1

# FIG.2

Office européen
des brevets

**RAPPORT DE RECHERCHE EUROPEENNE**

Numero de la demande

EP 95 40 2289

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 484 035 (AT&T CO.)<br>* revendication 1; figures 1,2 *<br>--- | 1,3 | C03B29/02<br>C03B37/012<br>C03C15/00 |
| A | EP-A-0 440 130 (ALCATEL FIBRES OPTIQUES)<br>* revendications 1,2 *<br>--- | 1,3 | |
| A | EP-A-0 519 834 (FRANCE TELECOM)<br>* colonne 15, ligne 7 - ligne 10;<br>revendications 1,2 *<br>--- | 1,2 | |
| A | DE-A-30 31 160 (SIEMENS AG)<br>* revendications 1-9 *<br>--- | 1,2 | |
| A | GB-A-2 067 182 (INTERNATIONAL STANDARD ELECTRIC CORP.)<br>* revendications 1-5 *<br>--- | 1,2 | |
| A | EP-A-0 091 173 (N.V.PHILIPS' GLOEILAMPENFABRIEKEN)<br>* revendications 1,4-6 *<br>--- | 1,2 | |
| A | DE-A-39 21 086 (KABELMETAL ELECTRO GMBH)<br>* colonne 2, ligne 56 - ligne 58;<br>revendications 1,4 *<br>--- | 1,2 | **DOMAINES TECHNIQUES RECHERCHES (Int.Cl.6)**<br><br>C03B<br>C03C |
| A | PATENT ABSTRACTS OF JAPAN<br>vol. 11 no. 381 (C-464) ,12 Décembre 1987<br>& JP-A-62 153136 (FUJIKURA LTD.) 8 Juillet 1987,<br>* abrégé *<br>----- | 1,2 | |

Le présent rapport a été établi pour toutes les revendications

| Lieu de la recherche | Date d'achèvement de la recherche | Examinateur |
|---|---|---|
| LA HAYE | 15 Janvier 1996 | Stroud, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant